(19) Europäisches Patentamt
European Patent Office
Office européen des brevets

(11) Publication number: **0 362 688 A2**

(12) **EUROPEAN PATENT APPLICATION**

(21) Application number: 89117922.8

(22) Date of filing: 28.09.89

(51) Int. Cl.5: C08G 65/28 , C08G 65/10

(30) Priority: 06.10.88 US 254143

(43) Date of publication of application: 11.04.90 Bulletin 90/15

(84) Designated Contracting States: DE FR GB IT

(71) Applicant: **BASF Corporation**
**9 Campus Drive**
**Parsippany, NJ 07054(US)**

(72) Inventor: **Ott, Roger Alan**
**23250 East River Road**
**Grosse Ile Michigan 48138(US)**
Inventor: **The other inventor has agreed to waive his entitlement to designation**

(74) Representative: **Michaelis, Wolfgang, Dr. et al**
**c/o BASF Aktiengesellschaft**
**Carl-Bosch-Strasse 38**
**D-6700 Ludwigshafen(DE)**

(54) **Process for preparing high viscosity, low unsaturation polyoxyalkylene block polyethers.**

(57) Polyoxylakylene block polyethers having high viscosity and low unsaturation are prepared by controlling catalyst level and temperature during ethylene oxide addition.

EP 0 362 688 A2

# PROCESS FOR PREPARING HIGH VISCOSITY, LOW UNSATURATION POLYOXYALKYLENE BLOCK POLYETHERS

The present invention relates to a process for preparing polyoxyalkylene block polyethers. More particularly, the invention relates to a process for preparing block polyoxyalkylene polyethers having one or more polyoxyethylene blocks and at least one block derived from a higher alkylene oxide where the polyoxyalkylene block copolymer has a high aqueous viscosity and 1ow unsaturation level.

Polyoxyalkylene block polyethers are well known commercial products having many uses, including their use as nonionic surfactants and aqueous thickeners. Polyoxyalkylene block polyether surfactants generally have both hydrophobic and hydrophillic blocks and are described, for example, by Lundsted in U.S. Patent 2,674,619 and by Jackson and Lundsted in U.S. Patents 2,677,700 and 3,036,118. These references also disclose the preparation of such polyoxyalkylene block polyethers by oxypropylating an initiator molecule possessing two or more active hydrogen atoms in the presence of a basic catalyst such as sodium or potassium hydroxide. The polyoxypropylene hydrophobe is then oxyethylated to produce external hydrophiles, or, in certain cases, the oxypropylation and oxyethylation may be reversed to produce "reverse" nonionic surfactants having an internal hydrophile and external hydrophobes.

Diblock polyoxyalkylene polyethers or triblock polyoxyalkylene polyethers capped on one end are also useful products. These products are generally prepared by sequentially oxyalkylating a monofunctional initiator molecule, that is, an initiator molecule possessing one active hydrogen atom such as an alkanol or phenol. To prepare diblock polyethers by this method, the initiator is first reacted with a higher alkylene oxide, that is, one having three or more carbons. The resulting hydrophobe is then oxyethylated. For certain applications, the oxyalkylation sequence may be reversed. Triblock polyethers are similarly prepared, but with a third oxyalkylation utilizing the same alkylene oxide as used for the first oxyalkylation. Diblock and triblock polyoxyalkylene polyethers may also be prepared from an initiator molecule possessing two or more active hydrogens.

For example, a triblock polyoxyalkylene polyether may be conventionally prepared as shown in the reaction scheme below by first oxypropylating a difunctional initiator molecule followed by oxyethylation. In these reaction schemes, OP and PO represent oxypropyl residues derived from propylene oxide while OE and EO represent analogously derived oxyethyl groups.

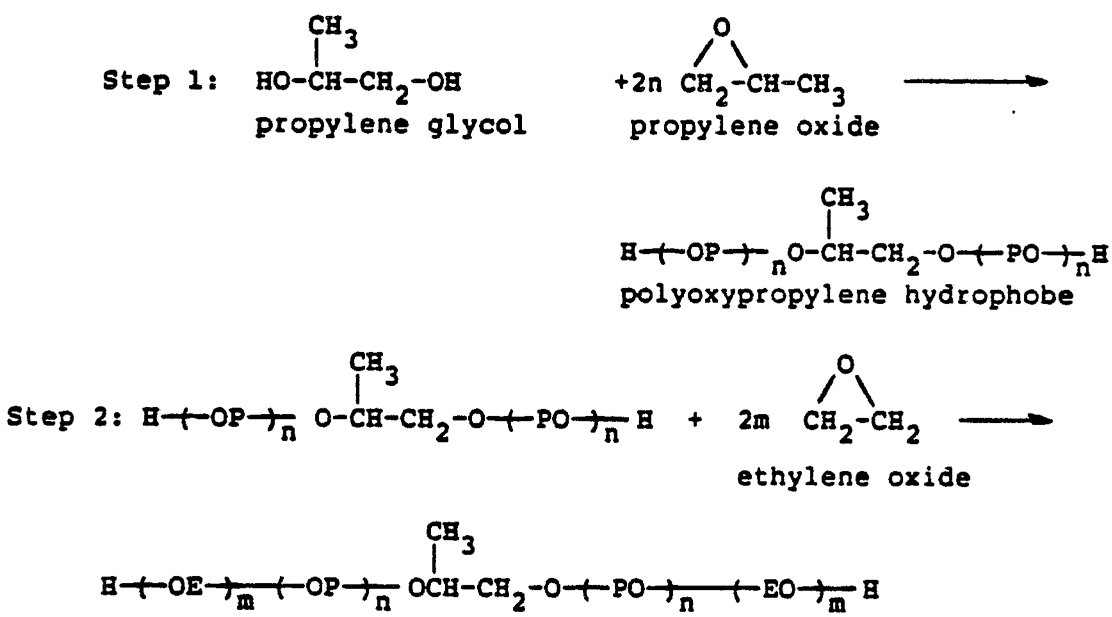


An analogous monofunctional, monocapped triblock polymer may be prepared starting with a monol, R-OH, such as methanol, butanol or benzylalcohol and altering the oxyalkylation sequence as follows:

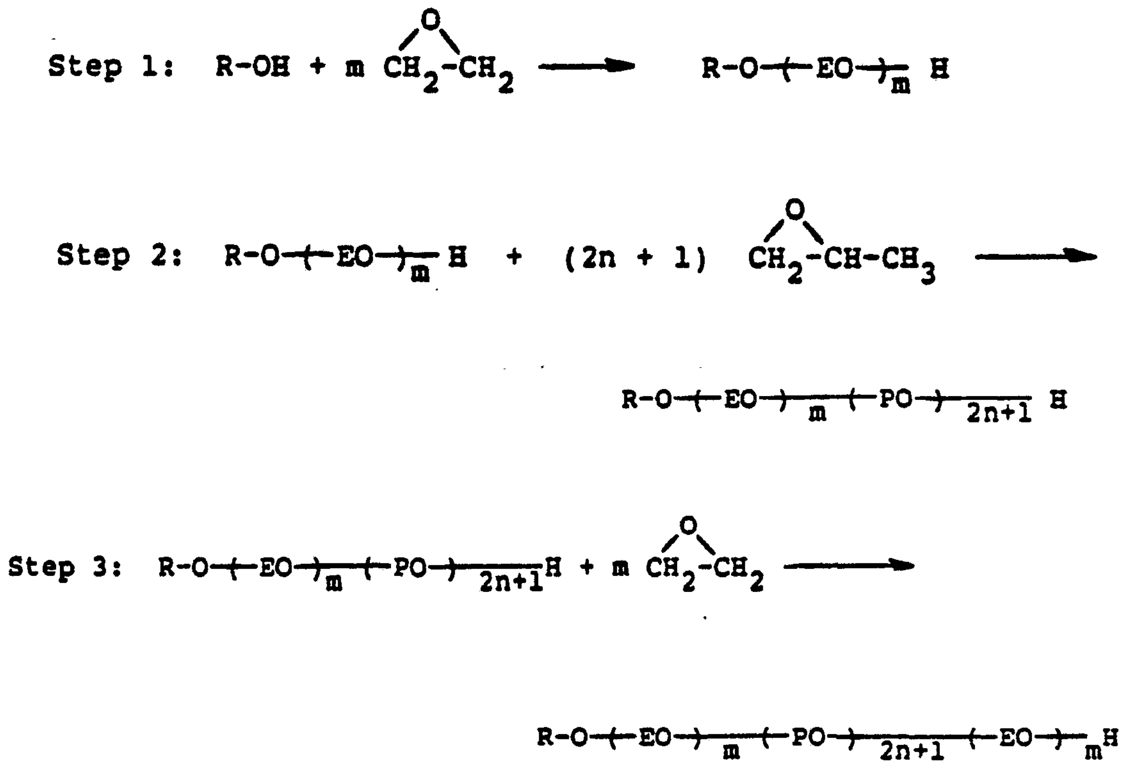


Such mono-capped block polyethers where the cap is joined to the block polyether by an ether linkage are hydrolitically stable and have been shown to possess different physical and chemical properties as compared to their non-capped analogs including modified surface activity and increased thermal stability.

The polyoxyalkylene polyethers described above have proven useful in numerous application, particularly those requiring surface active properties such as detergents, foaming and defoaming agents, emulsifying and dispersing agents, and as thickeners in aqueous systems. The methods of preparing polyoxyalkylene polyethers previously described never results in a single, uniform product molecule, but rather a cogeneric mixture containing molecules with varying total molecular weights as well as varying hydrophobe and hydrophile weights is afforded. This is particularly true as the molecular weights increase. Although it is well known that block polyether surfactants having uniform, narrow molecular weights and compositions prepared from such block polyethers may have properties markedly different from those of ordinary commercial products, it has been impossible to prepare such specialty polyether surfactants without inordinate expense.

In the synthesis of polyoxypropylene glycols, it is generally known that an elimination reaction at the polyether chain terminus, which ordinarily results in forming allylic unsaturation and, at the same time, lowers and broadens the molecular weight of the product polyoxypropylene glycols, competes with the desired polymerization.

A mechanism for the elimination which is disclosed in U.S. Patent 3,393,243 is discussed in Ceresa, Block and Graft Copolymerization, volume 2, published by Wiley-Interscience at page 18. The mechanism apparently involves hydrogen abstraction by way of a specific cyclic transition state which may be represented as follows:

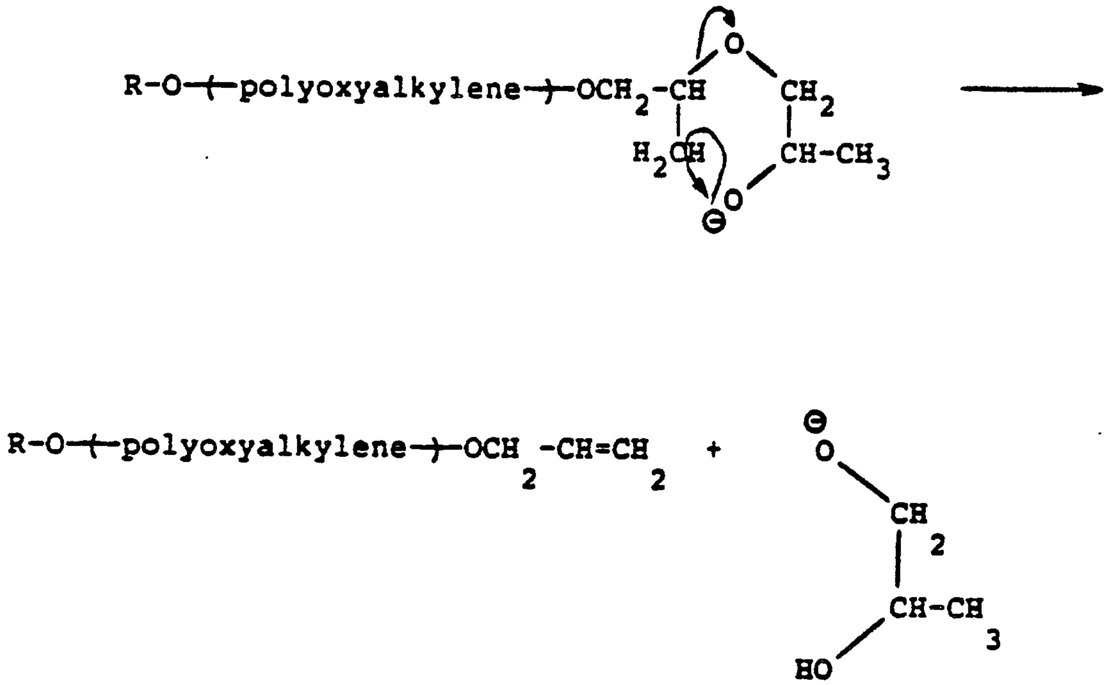

The unsaturation formed increases as a direct function of the equivalent weight. Eventually, a point is reached where further propylene oxide addition fails to increase the average molecular weight.

It is also generally known that the reaction temperature, catalyst concentration and type of counterion ($Li^+$, $Na^+$, $K^+$, $Rb^+$ and $Cs^+$) affect the degree of unsaturation during the polymerization of propylene oxide. With higher temperature and lower catalyst amounts, the degree of unsaturation is higher. The counterions above are listed in decreasing order as to degree of unsaturation found in propylene oxide polymers. While it is readily theorized that polyoxypropylene glycols react by the above mechanism, the same is not recognized as true for polyoxyethylene glycols or for oxyethylated polyoxy (higher alkylene) glycols in general and particularly for oxyethylated polyoxypropylene glycols contai ning more than one oxyethyl group.

Theoretically, when a single oxyethyl group is added to a polyoxypropylene glycol an elimination mechanism may be involved which could adversely impact on the single oxyethyl group addition. This theoretical elimination mechanism would proceed as follows:

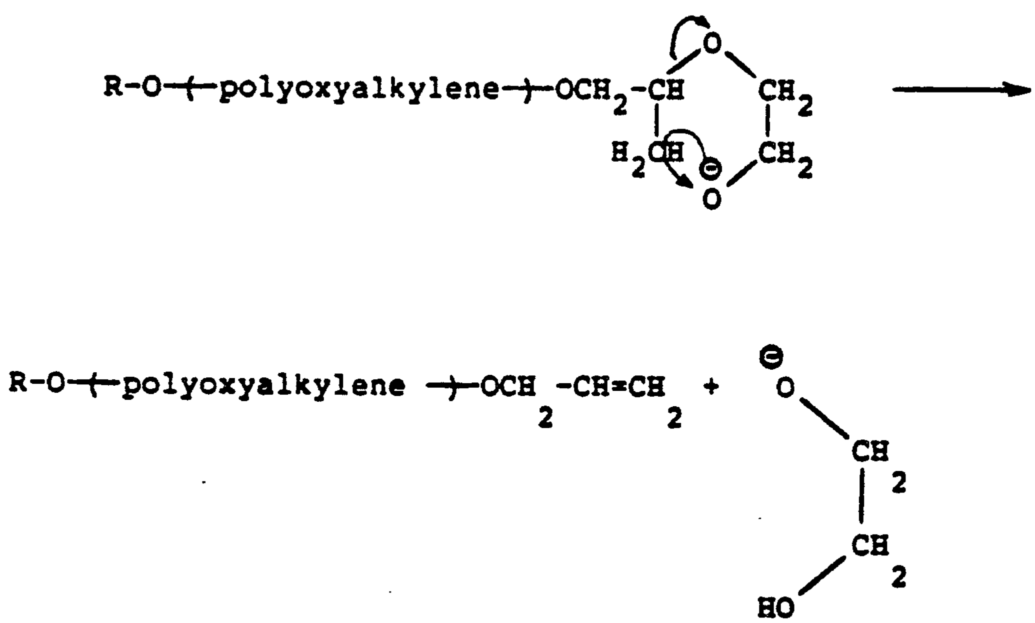

However, when more than one oxyethyl group is present, the requisite transition state cannot be achieved, and thus it has not been thought that elimination products could affect the polymerization reaction:

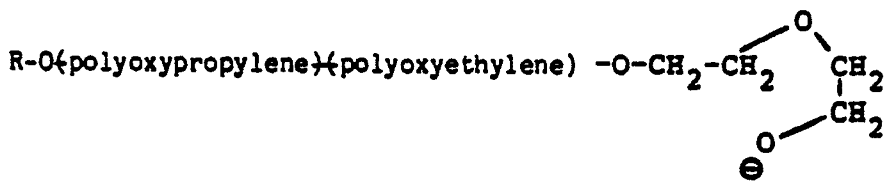
no elimination

No elimination, consequently, no unsaturation, and therefore no significant lowering of the polyether molecular weight is expected during ethylene oxide addition, and, in fact, none has previously been detected.

It has now been surprisingly discovered, contrary to previous belief, that unsaturation is produced not only during the preparation of polyoxypropylene glycols during oxypropylation of a suitable initiator, but is also formed during oxyethylation as well. There is at present no accepted mechanism by which to attribute this formation of unsaturation during ethylene oxide addition. The use of cesium containing compounds, particularly cesium hydroxide, as the polyoxyethylation catalyst in lowering the amount of unsaturation formed during ethylene oxide addition and, at the same time, producing block polyethers with narrow molecular weight distribution and uniform composition is disclosed in U.S. application serial number 932,575 filed November 20, 1986, and entitled "Process for the Preparation of Polyoxyalkylene Block Polymers Having Enhanced Properties", now U.S. Patent 4,764,567.

Although the use of cesium containing compounds as the polyoxyethylation catalyst affords an effective means of reducing the amount of unsaturation formed during ethylene oxide addition to polyoxypropylene glycols, the cost of the block polyether products increases significantly as a result of the higher cost of such cesium containing compounds in comparison to sodium and potassium

It has now been surprisingly discovered that polyoxyalkylene block polyethers having unexpectedly low levels of unsaturation and high aqueous viscosity may be simply and economically prepared by carrying out the oxyethylation portion of the polyether synthesis at a narrow temperature range and in the presence of a narrow range of catalyst.

It has now been surprisingly discovered that high molecular weight polyoxyalkylene block copolymers containing one or more polyoxyethylene blocks and at least one polyoxy (higher alkylene) blocks can be prepared by oxyethylating a polyoxy (higher alkylene) polymer at a temperature of from about 125°C to about 145°C in the presence of from about 0.045 to about 0.070 percent by weight of an alkali hydroxide catalyst with the exception of cesium hydroxide to afford a polyoxyalkylene block copolymer having an aqueous viscosity of about 85 centistokes or higher and a level of unsaturation of about 0.025 meq/g or less.

It was unexpectedly discovered that during oxyethylation of a polyoxy (higher alkylene) polymer, and particularly polyoxypropylene, unsaturation in the polyoxy (higher alkylene) polymer is induced. This phenomenon has not previously been considered of importance in block copolymer synthesis. In fact, known elimination mechanisms cannot satisfactorily account for the unsaturation levels observed in the block copolymers discussed in greater detail below.

The polyoxypropylene or higher alkylene oxide derived hydrophobe is prepared first by oxyalkylating a mono-, di-, or higher functional initiator such as methanol, butanol, ethylene glycol, propylene glycol, butylene glycol, glycerin, tetrakis (2-hydroxypropyl)-ethylene diamine or the like. Although any of the known alkali hydroxides may be used as the oxyalkylation catalyst, preferably sodium hydroxide or potassium hydroxide, and most preferably potassium hydroxide is used. The hydrophobe afforded is of modest molecular weight, that is equivalent weights of less than about 2,000, preferably from about 125 to about 1,500. The mechanics of this polyether preparation are otherwise conventional and well known to those skilled in the art. Examples of such preparation may be found, for example, in the treatise by Schick entitled Nonionic Surfactants, and in U.S. Patents 2,674,619; 2,677,700; and 3,036,188 all of which are incorporated in their entirety herein by reference.

The hydrophobe block or blocks of the polyoxyalkylene block polyethers of the present invention are derived from a higher alkylene oxide , or from tetrahydro furan. By the term "higher alkylene oxide" is meant alkylene oxides having from 3 to about 28 carbon atoms in the alkylene moiety. While the hydrophobe is preferably a polyoxypropylene hydrophobe, other hydrophobes based on higher alkylene oxides such as 1,2-butylene oxide and 2,3-butylene oxide may also be used. Although not preferred, the

hydrophobe may also be derived from $C_8$ to $C_{28}$ olefin oxides, or from the polymerization of tetrahydrofuran. The oxyalkylation of a suitable initiator with higher alkylene oxide results in the synthesis of a polyoxy (higher alkylene) block.

The hydrophillic block or blocks of the polyoxyalkylene block polyethers of the present invention are, of course, derived from ethylene oxide. Polymerization of the ethylene oxide to the polyoxy (higher alkylene) block of the polyoxyalkylene block polyethers is by conventional oxyethylation procedures except for the temperature and the amount of catalyst employed during oxyethylation. It is important that the temperature at which oxyethylation is carried out be from about 125°C to about 145°C, and preferably from about 130°C to about 140°C. Further, although any of the conventional alkali hydroxide catalysts known for oxyethylation may be employed in the process of the present invention, preferably sodium hydroxide or potassium hydroxide are used and most preferably potassium hydroxide. The alkali hydroxide catalyst is employed at from about 0.045 to about 0.070 percent by weight and preferably at from about 0.05 to about 0.065 percent by weight. These percents by weight are in relation to the weight of the polyoxyalkylene block copolymer product.

The molecular weight of the tetrafunctional polyoxyalkylene block copolymer product afforded by the process of the present invention is from about 6000 to about 80,000. These molecular weights correspond to an equivalent weight of from about 1500 to about 20000. The hydrophobe portion of the block copolymer has a molecular weight of from about 500 to about 9,000, which corresponds to an equivalent weight of from about 125 to about 2250.

The process of the present invention affords block copolymers having a 15 percent aqueous viscosity at 50°C of about 85 centistokes or higher, and preferably about 90 centistokes or higher. These block copolymer products have an unsaturation level of about 0.025 meq/g or less, preferably about 0.020 meq/g or less.

The following examples will serve to better illustrate the process of the present invention. The oxyalkylation is performed in a stainless steel high pressure autoclave. The initial charge, consisting of initiator or intermediate base, and catalyst, is vacuum stripped at a temperature of from about 90°C to about 125°C and a pressure of about 10 torr to remove water. The propylene oxide feed rates are adjusted so as to maintain the reactor pressure at 90 psig or below.

## Comparative Example A

## Unsaturation Formation During Ethylene Oxide Addition

A block polyether is prepared using conventional procedures. The initiator is tetrakis (2-hydroxypropyl) ethylene diamine which is oxypropylated at a temperature of 100°C using KOH catalysis at a catalyst concentration of 0.08 percent by weight based on the weight of the final product (post-oxyethylation). Following oxypropylation, a portion of the oxypropylated intermediate base is treated with magnesium silicate to remove residual KOH catalyst and analyzed. This portion of the oxypropylated intermediate base had a molecular weight of about 3,900 Dalton and an unsaturation, expressed as mg of KOH/g of polyether of 0.008. The remainder of the intermediate base is reacted at a temperature of 160°C with sufficient ethylene oxide to produce a polyoxypropylene-polyoxyethylene tetrol having a nominal molecular weight, based on ethylene oxide charged, of 39,500 Daltons. This product is treated with magnesium silicate to remove residual KOH catalyst and analyzed. The product has a measured unsaturation of 0.054 meq KOH/g. A 15 percent by weight aqueous solution has a viscosity at 50°C of only 18.0 centistokes.

This example illustrates that unsaturation is formed during ethylene oxide addition as well as during propylene oxide addition, a phenomenon not previously considered of importance in block copolymer synthesis. It was expected that unsaturation produced during oxypropylation would be "diluted" during ethylene oxide addition. The finished product, which has a molecular weight approximately 10 times higher than the polyoxypropylene intermediate base, would therefore have an unsaturation one-tenth as great, or approximately 0.0008 meq KOH/g. However, instead of this very low, almost insignificant level of unsaturation, the finished product shows an unsaturation of 0.054 meq KOH/g, some 7 times higher than the intermediate base, and sixty-seven times higher than expected. The elimination mechanism previously discussed cannot account for this large increase in unsaturation.

## Comparative Example B

A block polyether is prepared from tetrakis (2-hydroxypropyl) ethylene diamine as an initiator which is oxypropylated at a temperature of 105° C using KOH catalysis at a catalyst concentration of 0.16 percent by weight based on the weight of the final product (post oxyethylation) to afford a polyoxypropylene intermediate base. The inter mediate base is then reacted at a temperature of 160° C to afford a polyoxypropylene-polyoxyethylene tetrol. The product has a measured unsaturation of 0.111 meq KOH/g and a 15 percent by weight aqueous solution has a viscosity at 50° C of 6.1 centistokes.

This example demonstrates that the known conditions for reducing unsaturation during propylene oxide addition of relatively low temperature and high catalyst level did not reduce the level of unsaturation measured in the block copolymer product. Along with Comparative Example A, this example further illustrates that unsaturation is being formed during ethylene oxide addition.

## Comparative Example C

An intermediate base polyoxypropylene polyether is prepared substantially in accordance with the procedures described in Comparative Example A. The intermediate base had a molecular weight of about 3,900 Dalton and unsaturation of about 0.008 meq KOH/g. This intermediate base was then oxyethylated at a temperature of about 135° C. The polyoxypropylene-polyoxyethylene tetrol product has a measured unsaturation of 0.016 meq KOH/g and a 15 percent by weight aqueous solution viscosity at 50° C of 58.0 centistokes.

This example demonstrates that when the temperature of oxyethylation is reduced, although unsaturation for the block coploymer product is within an acceptable range, the viscosity is still unacceptably low.

## Comparative Example D

A block polyether was prepared substantially as described in Comparative Example A except that a catalyst concentration of 0.095 percent by weight based on the weight of the final block polyether was used and the oxyethylation temperature was 140° C. The polyoxypropylene-polyoxyethylene tetrol product had a measured unsaturation of 0.020 meq KOH/g and a 15 percent by weight aqueous solution has a viscosity at 50° C of 31 centistokes.

This example demonstrates that higher catalysts level and lower oxyethylation temperature, as contrasted with Comparative Example A affords a block copolymer product having acceptable unsaturation but unacceptably low viscosity.

## Comparative Example E

A block polyether was prepared substantially in accordance with the procedures described in Comparative Example A except that 0.095 percent by weight KOH was used as a catalyst and the oxyethylation was carried out at a temperature of 130° C. The polyoxypropylene-polyoxyethylene tetrol product has a measured unsaturation of 0.012 meq KOH/g and a 15 percent by weight aqueous solution has a viscosity at 50° C of 27 centistokes.

This example demonstrates that with a higher catalyst level and lower oxyethylation temperature than in Comparative Example A, although the level of unsaturation is acceptable, the viscosity is unacceptably low.

## Example 1

A block polyether is prepared substantially as described in Comparative Example A except that the

catalyst (KOH) was used at a concentration of 0.047 percent by weight based on the weight of the final block polyether product and oxyethylation was carried out at 135° C. The polyoxypropylene polyoxyethylene tetrol product has a measured unsaturation of 0.018 meg KOH/g and a 15 percent by weight solution has a viscosity at 50° C of 90.4 centistokes.

## Example 2

A block polyether is prepared substantially as described in Comparative Example A except that KOH was used as a catalyst at a concentration of 0.065 percent by weight based on the weight of the final product and oxyethylation was carried out at 130° C. The polyoxypropylene polyoxy ethylene tetrol product has a measured unsaturation of 0.012 meq KOH/g and a 15 percent by weight aqueous solution has a viscosity at 50° C of 194 centistokes.

## Example 3

A block polyether was prepared substantially as described in Comparative Example A except that the potassium hydroxide catalyst concentration was 0.065 and the oxyethylation was carried out at 140° C. The polyoxypropylenepolyoxyethylene tetrol product has a measured unsaturation of 0.019 meq KOH/g and a 15 percent by weight aqueous solution has a viscosity at 50° C of 122 centistokes.

When the measured unsaturation and viscosity values for Examples 1, 2, and 3 are compared with those values in Comparative Examples A through E, it will be appreciated that it was quite surprising and unexpected that unsaturation in a polyoxypropylene glycol was formed during ethylene oxide addition. Further, it was also quite surprising and unexpected that by reducing both the amount of catalyst used and the oxyethylation temperature, the unsaturation levels induced by ethylene oxide addition could be significantly reduced.

It should be understood that the instant specification and claims are set forth by way of illustration and not limitation and that various modifications and changes may be made without departing from the spirit and scope of the present invention as defined by the appended claims.

## Claims

1. A process for preparing high molecular weight polyoxyalkylene block copolymers containing one or more polyoxyethylene blocks and one or more polyoxy (higher alkylene) blocks comprising oxyethylating a polyoxy (higher alkylene) polymer at a temperature of from about 125° C to about 145° C in the presence of from about 0.045 to about 0.070 percent by weight of an alkali hydroxide catalyst with the exception of cesium hydroxide to afford a polyoxyalkylene block copolymer having an aqueous viscosity of about 85 centistokes or higher and a level of unsaturation of about 0.025 meq/g or less.

2. The process of claim 1 wherein said polyoxy (higher alkylene) block is selected from polyoxypropylene and polyoxybutylene..

3. The process of claim 2 wherein said polyoxy (higher alkylene) block is polyoxypropylene.

4. The process of claim 1 wherein said alkali hydroxide catalyst is sodium hydroxide or potassium hydroxide.

5. The process of claim 4 wherein said alkali hydroxide catalyst is potassium hydroxide.

6. The process of claim 1 wherein said oxyethylation temperature is from about 130° C to about 140° C.

7. The process of claim 1 wherein said catalyst is present at from about 0.05 to about 0.065 percent by weight.

8. The process of claim 1 wherein said polyoxyalkylene block copolymer has an aqueous viscosity of about 90 centistokes or higher.

9. The process of claim 1 wherein said polyoxyalkylene block copolymer has an unsaturation level of about 0.020 meq/g or less.